# EUROPÄISCHE PATENTANMELDUNG

(11) **EP 3 632 852 A1**
(43) Veröffentlichungstag der Anmeldung: **08.04.2020**
(21) Anmeldenummer: 18425077.7
(22) Anmeldetag: 02.10.2018
(51) Int. Cl.: C02F 1/00, C02F 1/68, E04H 4/12, C02F 103/42, C02F 1/66, A61H 33/04

(54) **SCHWIMMBADANLAGE UND VERFAHREN ZUR WASSERBEHANDLUNG IN EINER SCHWIMMBADANLAGE**

(71) Anmelder: Hofer Group S.r.l., 39047 Santa Cristina Val Gardena (Bolzano) (IT)
(72) Erfinder: Hofer, Eugen, 39047 Santa Cristina Val Gardena (Bolzano) (IT)
(74) Vertreter: Romano, Giuseppe

(57) **Zusammenfassung**

Die vorliegende Offenbarung bezieht sich auf ein Verfahren zur Behandlung von Wasser für eine Schwimmbadanlage und eine Schwimmbadanlage. Im Besonderen ermöglichen das Verfahren und die Anlage, die chemische Zusammensetzung des salzhaltigen Wassers, das in der Anlage zirkuliert, individuell zu gestalten und anzupassen, um es innerhalb einer gewünschten Schwelle von Parametern zu erhalten.

## Beschreibung

Die vorliegende Erfindung bezieht sich auf ein Verfahren zur Wasserbehandlung für eine Badeanlage mit salzhaltigem Wasser und eine Badeanlage.

In den Thermalbädern und Wellnesszentren gibt es immer mehr Badeanlagen mit salzhaltigem Wasser. Der Salzgehalt des Wassers dieser Art Badeanlagen erinnert an Meerwasser und gestaltet somit das Badeerlebnis angenehmer für die Badegäste.

Das salzhaltige Wasser mit einer durchschnittlichen Konzentration von ungefähr 1-13 Gramm pro Liter wird durch das Einspeisen von Natriumchlorid (NaCl) ins Wasser erzeugt.

Eine Badeanlage mit salzhaltigem Wasser nach dem bekannten Stand der Technik besteht aus einem oder mehreren Schwimmbecken, einem Ausgleichsbehälter und einer Reihe von Komponenten, wie Filter und Pumpen, die dazu dienen, das Wasser zu filtern und ordnungsgemäß zwischen den Schwimmbecken und dem Ausgleichsbehälter fließen zu lassen. Im Besonderen ist eine Badeanlage mit salzhaltigem Wasser ein im Wesentlichen geschlossener Kreislauf: Das Wasser, das durch die Anwesenheit der Badegäste und infolge der Zirkulation aus dem Schwimmbecken austritt, wird im Ausgleichsbecken gesammelt und dann erneut in das Schwimmbecken eingespeist. Das verdunstete oder von den Badegästen entnommene salzhaltige Wasser wird erneut mit Wasser ergänzt, das für den hygienisch-sanitären Gebrauch bestimmt ist, wobei dies im ausreichenden Maße erfolgt, um stets die korrekte Funktionsweise der Anlage zu gewährleisten.

Es ist somit verständlich, dass das innerhalb der Anlage zirkulierende salzhaltige Wasser regelmäßig behandelt werden muss, um es auf normale Betriebswerte hinsichtlich des pH-, Chlor- und Salzwerts zu bringen. Tatsächlich neigt das salzhaltige Wasser, das im Schwimmbecken der Anlage vorhanden ist, dazu, sich aufgrund des Vorhandenseins verschmutzender Substanzen, die von den Badegästen eingebracht werden, wie beispielsweise Bakterien aus Speichel, Hautgewebe, Talg, Schweiß und Schleim, zu verändern.

Im Besonderen erfolgt im Ausgleichsbehälter die Regulierung des Salzgehalts des Anlagenwassers. Um den Salzgehalt des Wassers an den vorgesehenen Betriebswert anzugleichen, werden in Abhängigkeit des Volumens des in der Anlage zirkulierenden Wassers manuell Salztabletten (Natriumchlorid, NaCl, min. 98 %) eingegeben, deren Anzahl dem Erfahrungswert zufolge geschätzt wird.

Es ist offensichtlich, dass diese Art und Weise der Erzeugung von salzhaltigem Wasser sehr stark vom menschlichen Fehlern betroffen ist, wenn beispielsweise ein Bediener dem Vorgang nicht die erforderliche Aufmerksamkeit schenkt, was eine große Fluktuation des Salzgehalts im Wasser der Anlage mit sich bringt. Beispielsweise erreicht man zum Zeitpunkt der Auflösung der Salztablette im Ausgleichsbehälter einen erhöhten wertan Salzgehalt gegenüberdemin der Anlage vorhandenen Wasser.

Außerdem erlaubt die Verwendung von Salztabletten zur Herstellung von salzhaltigem Wasser keine Anpassung oder individuelle Gestaltung der chemischen Zusammensetzung des salzhaltigen Wassers der Anlage nach Wunsch.

Schließlich ist ein weiteres Problem auf die Tatsache zurückzuführen, dass die Einführung von Salztabletten direkt ins Ausgleichsbehälter unvorhergesehene Salzniederschläge verursacht. Salzniederschläge müssen regelmäßig durch die manuelle Intervention eines Bedieners entfernt werden, um Schäden an der Anlage zu vermeiden. Diese Instandhaltungsintervention erfordert die Unterbrechung des Betriebs der Anlage.

Aus dem bisher Gesagten ergibt sich, dass die Verfahren zur Behandlung des salzhaltigen Wassers in den oben genannten Badeanlagen verbessert werden können und weniger von der Verwendung von Salztabletten abhängig sind.

Daher besteht das technische Problem, das durch die vorliegende Offenbarung aufgeworfen und gelöst wird, darin, ein Verfahren und eine Anlage bereitzustellen, die im Hinblick auf die Verfahren zur Handhabung von salzhaltigem Wasser optimiert sind und die es ermöglichen, die Nachteile des Standes der Technik zu überwinden.

Dieses Problem wird durch ein Verfahren gemäß Anspruch 1 und durch eine Anlage gemäß Anspruch 18 gelöst.

Sekundäre Merkmale der Aufgabe der vorliegenden Offenbarung sind in den entsprechenden abhängigen Ansprüchen definiert.

Im Rahmen der vorliegenden Offenbarung wird auf drei Arten von Wasser Bezug genommen. Der erste Typ ist das sogenannte "Speisewasser", d.h. ankommendes Wasser, wie zum Beispiel Wasser für sanitäre Zwecke aus der Wasserversorgung einer Wasserleitung. Der zweite Wassertyp ist das "Salzwasser ", d. h. das salzhaltige Wasser, wobei das Salz nicht notwendigerweise die Form von Natriumchlorid aufweisen muss, das dazu bestimmt ist, innerhalb der Anlage zu zirkulieren und in das die Badegäste eintauchen, wenn sie in das Schwimmbecken der Anlage eintreten. Schließlich wird der dritte Typ, auf den Bezug genommen wird, als "Korrekturwasser" bezeichnet. Unter "Korrekturwasser" versteht man das Wasser, das, wenn es richtig mit dem in der Anlage zirkulierenden Wasser gemischt wird, es ermöglicht, dass dessen Zusammensetzung korrigiert wird.

In der vorliegenden Offenbarung bezieht sich der Begriff Zusammensetzung auf den Satz von Eigenschaften des Wassers, die es erlauben, einige Messungen durchzuführen, wie beispielsweise Trübung und / oder elektrische Leitfähigkeit und / oder Zusammensetzung in Salzen und / oder Konzentration des salzhaltigen Wassers.

Im Besonderen lässt sich das Verfahren der Wasserbehandlung in einer Schwimmbadanlage, die mindestens ein Schwimmbecken und ein damit verbundenes Ausgleichsbehälter umfasst, in zwei Hauptmakrophasen unterteilen. Die erste Makrophase, die zum Zeitpunkt der Vorbereitung der Anlage erfolgt, besteht darin, dass aus einem Wasserversorgungssystem ein erstes Volumen an Speisewasser, wie z. B. Sanitärwasser, entnommen wird, dem ein erstes Gemisch von Mineralsalzen zugegeben wird, um salzhaltiges Wasser mit einer entsprechenden Nennzusammensetzung zu erzeugen, das im Becken und im Ausgleichsbehälter der Anlage zirkuliert. Die zweite Makrophase des Verfahrens wird hingegen zyklisch während des Anlagenbetriebs wiederholt. Im Besonderen wird die zweite Makrophase automatisch durchgeführt, wenn eine Abweichung des realen Zusammensetzung des salzhaltigen Wasser von der nominalen Zusammensetzung des salzhaltigen Wassers festgestellt wird. Zusammengefasst lässt sich sagen, dass in dieser Makrophase mindestens eine zweite Menge Speisewasser verwendet wird, um Korrekturwasser mit einer entsprechenden chemischen Zusammensetzung zu erzeugen und dieses Korrekturwasser anschließend mit dem in der Anlage zirkulierenden salzhaltigen Wasser zu mischen. Je mehr das Variationsintervall der Zusammensetzung des salzhaltigen Wassers abweicht, d. h. je enger die Abweichung der chemischen Zusammensetzung des salzhaltigen Wassers von der eigenen nominalen oder idealen Zusammensetzung bestimmt wird, desto mehr besteht die Möglichkeit, Salzgehaltshöchstwerte im salzhaltigen Wasser zu vermeiden.

Daher verringert die Verfahrensaufgabe der vorliegenden Offenbarung, die es ermöglicht, eine automatische Korrektur der Zusammensetzung des salzhaltigen Wassers, das in der Anlage zirkuliert, zu bewirken, die Wahrscheinlichkeit eines menschlichen Fehlers.

Darüber hinaus wird die Mischung von Salzen, die in das Speisewasser eingeführt werden soll, in geeigneter Weise entsprechend den Eigenschaften erzeugt, die sie für das salzhaltige Wasser und folglich für das Korrekturwasser zu erhalten gewünscht wird. Auf diese Weise ist es möglich, die chemische Zusammensetzung des in der Anlage zirkulierenden salzhaltigen Wassers für jede Anlage "individuell zu gestalten".

Ein weiterer Vorteil der vorliegenden Offenbarung besteht in der Tatsache, dass die Wahrscheinlichkeit einer Niederschlagsbildung in der Anlage reduziert ist, weil die Salze im Speisewasser aufgelöst werden, das einen festen und vorab bekannten pH-Wert aufweist, während sich der pH-Wert des in der Anlage zirkulierenden salzhaltigen Wassers aufgrund der Anwesenheit der Badegäste verändert. Zur Beschränkung der Niederschlagsbildung kann das Speisewasser auch erhitzt werden, was die Auflösung der Salze fördert.

Weitere Vorteile, Eigenschaften und Verfahren zur Verwendung der Aufgabe der vorliegenden Offenbarung ergeben sich aus der folgenden detaillierten Beschreibung einiger ihrer bevorzugten Ausführungsbeispiele, wobei diese als Beispiele angeführt werden, ohne sich auf diese zu beschränken.

Es wird auf die Figuren der beigefügten Zeichnungen Bezug genommen, wobei:

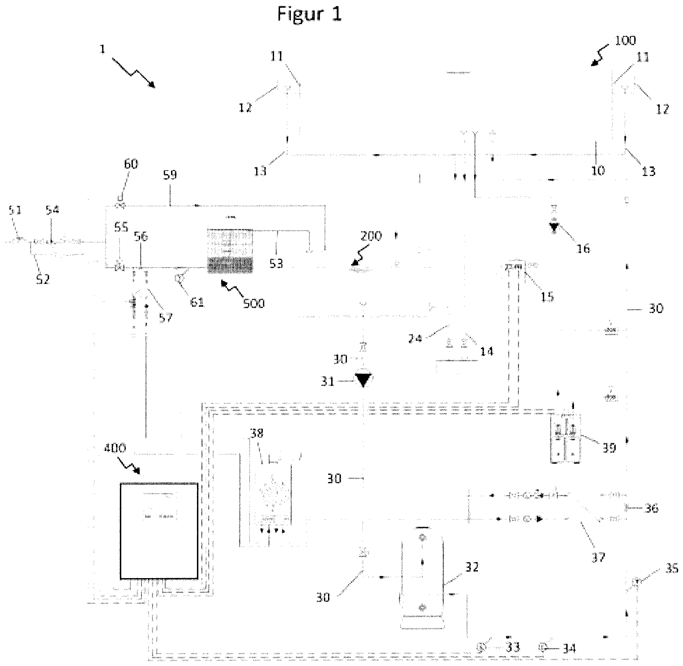

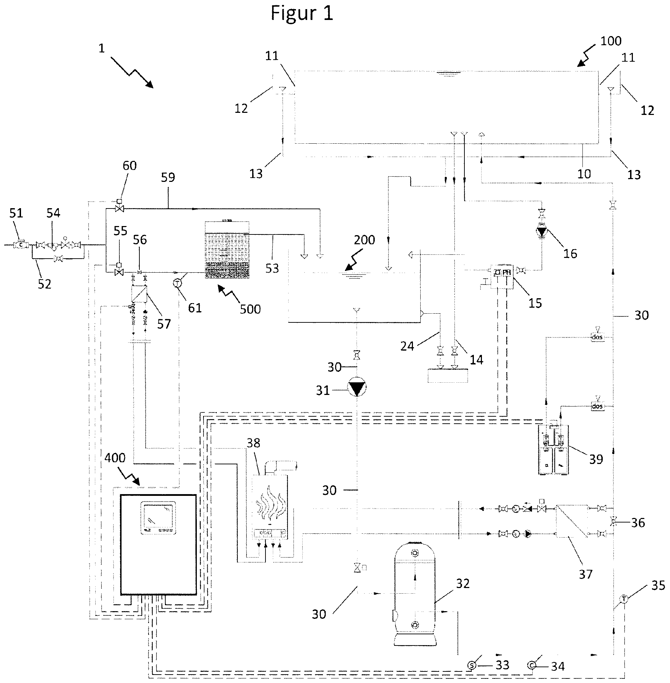

- Figur 1 eine schematische Darstellung der Anlage gemäß einer Ausführungsform der vorliegenden Offenbarung veranschaulicht.

Die vorliegende Offenbarung betrifft ein Verfahren zur Wasserbehandlung für eine Schwimmbadanlage mit salzhaltigem Wasser und für eine Schwimmbadanlage.

Mit Bezug auf Figur 1, wird ein bevorzugtes Ausführungsbeispiel der Anlage gemäß der vorliegenden Offenbarung 1 insgesamt mit 1 bezeichnet.

Die Anlage enthält mindestens ein Schwimmbecken 100, einen Ausgleichsbehälter 200 und einen Reaktionsfilter 500 auf das nachfolgend noch eingegangen wird. Anlage 1 umfasst des Weiteren auch eine elektronische Steuerung 400, vorzugsweise vom Typ der programmierbaren Logik, und Mittel zur Erfassung 33, 34 der Zusammensetzung des Salzhaltige Wasser s, die an diese elektronische Steuerung 400 angeschlossen sind. Das Becken 100 ist das Hauptbecken zur Aufnahme von salzhaltigem Wasser, in das die Badegäste eintauchen. Das Becken 100 ist durch eine Bodenwand 10 und durch eine oder mehrere Seitenwände 11 begrenzt.

In der Nähe des oberen Randes der Seitenwände 11 befinden sich ein oder mehrere umlaufende Sammelkanäle 12 zur Aufnahme von salzhaltigem Wasser, das durch die Anwesenheit und Bewegung der Badegäste und die Zirkulation dazu neigt, aus dem Becken 100 auszutreten.

Die Überlaufrohre 13 verbinden die umlaufenden Sammelkanäle 12 mit einem Ausgleichsbehälter 200, so dass das aus dem Becken 100 ausgetretene salzhaltige Wasser in ihn hineinfließt.

Vorzugsweise stromabwärts des Beckens ist eine Erfassungsstation für den Chlor- und pH-Wert vorhanden. Die Erfassungsstation für Chlor und pH-Wert umfasst eine Pumpe 16, die angepasst ist, um eine Probe des salzhaltigen Wasser s zu entnehmen, die für die Messung von Chlor und pH erforderlich ist, und einen Chlor- und pH-Wertdetektor 15, zum Beispiel ein multiparametrisches Chlor- und pH-Meter, das stromabwärts der Pumpe 16 angeordnet ist. Der Chlor- und pH-Wertdetektor 15 sind elektrisch mit dem elektronischen Regler 400 verbunden, der die gemessenen Werte aufzeichnet. Der Chlor- und pH-Wertdetektor 15 sind ebenfalls hydraulisch durch Rohre mit dem Ausgleichsbehälter 200 verbunden, in dem die salzhaltige Wasserprobe nach ihrer Analyse abgelassen wird.

Der Ausgleichsbehälter 200 sammelt das aus dem Becken überlaufende salzhaltige Wasser und das salzhaltige Wasser, das schließlich für die Analyse der Chlor- und pH-Werte entnommen/genutztwird. Daher ist der Ausgleichsbehälter 200 so bemessen, dass er die Wassermenge, die durch die maximale Anzahl der Badegäste verdrängt wird, und die Wassermenge im Verhältnis zu jeder Wellenbewegung, die von Badegästen innerhalb des Beckens 100 erzeugt wird, die Wassermenge enthält und zu dem, die in den umlaufenden Sammelkanälen 12 und in den Überlaufrohren 13 enthalten ist, sowie die Wassermenge, die für die Probenahme der pH- und Chlorwerte erforderlich sein kann. Weitersist es bevorzugt, dass der Ausgleichsbehälter ferner ermöglicht, das zum Waschen von mindestens einem Filter, beispielsweise dem Filter 32, erforderliche Wasservolumen und ein Mindestvolumen an Wasser zu enthalten, um einen Trockenlauf der Pumpen 31 zu verhindern.

Der Ausgleichsbehälter 200 ist über Abflussrohre 24 mit dem Abwassersystem hydraulisch verbunden. Vorzugsweise ist auch das Becken 100 über Abflussrohre 14 mit dem Abwassersystem verbunden.

Damit die Anlage einwandfrei funktioniert, muss das im Ausgleichsbehälter 200 gesammelte salzhaltige Wasser in dem Becken 100 zurückgeführt werden. Dazu wird der Ausgleichsbehälter 200 über die Zuführrohre 30 hydraulisch mit dem Becken 100 verbunden. Die Zirkulation des salzhaltigen Wassers innerhalb der Zuführrohre 30 wird über mindestens eine Pumpe 31 gewährleistet, vorzugsweise über eine Filterpumpe, die mit einem Vorfilter ausgestattet ist, der stromabwärts des Ausgleichsbehälters 200 angeordnet ist.

Vorzugsweise ist entlang der Zuführleitung, beispielsweise stromabwärts von der Pumpe 31, mindestens ein Filter 32, beispielsweise aus Quarz oder Glasschrot, vorhanden, um jegliche in dem salzhaltigen Wasser dispergierten festen Verunreinigungen zu entfernen.

An dem Abschnitt der Zuführleitung 30 am Auslass des Filters 32 sind auch Mittel zum Erfassen der chemischen Zusammensetzung vorhanden, die elektrisch mit dem Regler 400 verbunden sind, das die von diesem erfassten Daten aufzeichnet und verarbeitet. Diese Mittel umfassen vorzugsweise eine Leitfähigkeits- 34 und eine Trübungssonde 33. Die Leitfähigkeitssonde 34, beispielsweise eine induktive Sonde mit Mikro-Transmitter, misst die elektrolytische Leitfähigkeit des salzhaltigen Wassers. Die Trübungssonde 33, beispielsweise des nephelometrischen Typs, detektiert stattdessen nach dem bekannten Stand der Technik das Vorhandensein fester Partikeln wie Kalkstein, Schlamm, Mikroorganismen, die im salzhaltigen Wasser suspendiert sind. Im Besonderen beträgt der Messbereich der Trübungssonde beispielsweise zwischen 0,000 und ungefähr 4.000,000 FNU/NTU.

Vorzugsweise ist entlang der Zuführleitung 30, beispielsweise stromabwärts von den Mitteln zum Erfassen der chemischen Zusammensetzung, auch eine Temperatursonde 35 angeordnet, die ebenfalls elektrisch mit dem Regler 400 verbunden ist. Noch bevorzugter sind auch ein Wärmetauscher 37 und ein Heizkessel 38 vorhanden. Anhand der von der Temperatursonde 35 erfassten Temperatur regelt der Regler 400 das Öffnen und Schließen eines ersten Umgehungsventils 36, mit dem das in der Zuführleitung 30 enthaltene salzhaltige Wasser im Wärmetauscher 37 und Kessel 38 gefördert werden kann. Die vom Kessel 38 erzeugte Wärme wird über den Wärmetauscher 37 auf das salzhaltige Wasser übertragen, das über die Umgehung aus der Zuführleitung im Kessel 38 gefördert wird. Das salzhaltige Wasser wird in der Regel auf eine Temperatur von ca. 30-35°C erhitzt.

Wenn eine Vorrichtung 15 zur Erfassung des Chlor- und pH-Werts vorhanden ist, ist es auch bevorzugt, dass entlang der Zuführleitung 30 stromabwärts hinter den Mitteln zur Erfassung der chemischen Zusammensetzung des salzhaltigen Wassers, eine Vorrichtung 39 zur Dosierung von Chlor und zur Korrektur des pH-Wertes vorhanden ist.

Diese Vorrichtung 39 zur Dosierung und Korrektur wird vom Regler 400 betätigt, mit dem es elektrisch auf der Grundlage der von der Vorrichtung 15 zur Erfassung des Chlor- und pH-Werts gemessenen Werte verbunden ist. Beispielsweise wird die Vorrichtung 39 zur Dosierung und Korrektur betätigt, wenn das freie, im salzhaltigen Wasser vorhandene Chlor das Niveau von ungefähr 0,70-1,00 ppm unterschreitetbzw. der pH-Wert des salzhaltigen Wassers um ungefähr 7,00-7,60 vom normalen Niveau abweicht.

Die Anlage 1 wird durch das Speisewasser versorgt, das aus einem Wasserversorgungssystem stammt, das an ein Wassersystemaußerhalb dieser Anlage 1 angeschlossen ist. Aus dem Wasserversorgungssystem wird das Speisewasser entnommen, um nach dem Verfahren, das ebenfalls dieser Offenlegung unterliegt, salzhaltiges Wasser für die Anlage 1 und Korrekturwasser zu erzeugen, das erforderlich ist, um die Zusammensetzung des salzhaltigen Wassers gegebenenfalls zu korrigieren. Vorzugsweise ist die Anlage 1 hydraulisch mit dem Wasserversorgungssystem einer Wasserleitung verbunden, und daher ist das Speisewasser vorzugsweise Wasser für den hygienisch-sanitären Gebrauch verwendet.

Insbesondere ist die Verbindung 51 zur Wasserversorgung hydraulisch über die Lastleitung 52 mit einem Tank oder Behälter des Reaktionsfilters 500 verbunden. In der der Lastleitung d. h. in Entsprechung des Lastrohrs 52, ist vorzugsweise ein Filter 54 mit Metallgitter angeordnet, um eventuelle feste, im Speisewasser abgelagerte Partikeln zurückzuhalten. Der Reaktionsfilter 500 f befindet sich stromaufwärts des Ausgleichsbehälters 200 und ist über das Verbindungsrohr 53 mit diesem hydraulisch verbunden.

An der Lastleitung 52 ist ein Lastventil 55 angeordnet, vorzugsweise vom motorisierten Typ, das elektrisch mit dem Regler 400 verbunden ist, was die Regelung des Speisewasserzuflusses zu dem Reaktionsfilter 500 ermöglicht.

Vorzugsweise ist stromaufwärts des Reaktionsfilters 500 ein Heizgerät, ein zweiter Wärmetauscher 57, ein Heizkessel 38 und ein weiteres Umgehungsventil 56 angeordnet. Das Umgehungsventil 56 ist an der Lastleitung 52 stromabwärts des Lastventil 55 angeordnet und wird elektrisch von Regler 400 geregelt, regelt die Übermittlung des Speisewassers an den zweiten Wärmetauscher 57 und an Heizkessel 38. Idealerweise befindet sich stromabwärts des Wärmetauschers 57 eine zweite Temperatursonde 61 zur Messung der Wassertemperatur vor dem Eintritt in den Reaktionsfilter 500.

Schließlich ist es bevorzugt, dass der Ausgleichsbehälter 200 auch direkt über eine Einspeisleitung 59 mit der Verbindung 51 zur Wasserversorgung verbunden ist. Der Zufluss des Speisewassers über die Einspeisleitung 59 wird mit Hilfe eines vorzugsweise motorisierten Füllventils 60 geregelt, das elektrisch durch Regler 400 geregelt wird.

Das Verfahren zur Behandlung von Wasser in einer Schwimmbadanlage ist nach dieser Erfindung in zwei Hauptmakrophasen aufgeteilt.

Normalerweise erfolgt die erste Makrophase zum Zeitpunkt der Vorbereitung der Schwimmbadanlage 1. Eventuell kann diese Phase erneut durchgeführt werden, falls man eine andere Zusammensetzung des in der Anlage zirkulierenden salzhaltigen Wassers erzielen möchte oder im Laufe der großen Instandhaltungsinterventionen.

Die erste Makrophase sieht vorab die Zubereitung des salzhaltigen Wassers vor, das innerhalb von Schwimmbadanlage 1 zirkulieren soll.

Zu diesem Zwecke wird aus dem Wasserversorgungssystem ein erstes Speisewasservolumen entnommen, dann wird diesem Wasser eine erste Mischung von Mineralsalzen hinzugefügt, die eine bestimmte Zusammensetzung aufweist. Die Zusammensetzung des salzhaltigen Wassers zum Zeitpunkt seiner Zubereitung oder Herstellung ist eine nominale oder ideale Zusammensetzung, die somit aus einer Reihe von Referenzparametern mit nominalen oder idealen Werten gekennzeichnet ist. In anderen Worten ist die nominale oder ideale Zusammensetzung die Zusammensetzung, die innerhalb von Anlage 1 gewünscht wird. Es ist daher erwünscht, dass die Zusammensetzung des salzhaltigen Wassers, das in dem System 1 zirkuliert, so nahe wie möglich an der nominalen oder idealen Zusammensetzung oder zumindest innerhalb bestimmter Schwellen- oder Grenzwerte gehalten wird, die für die Referenzparameter festgelegt sind.

Um insbesondere salzhaltiges Wasser herzustellen, wird das Lastventil 55 geöffnet, um ein erstes Volumen von Speisewasser aus der Verbindung 51 mit der Wasserversorgung zu entnehmen. Die Öffnung des Lastventils 55 wird vorzugsweise vom Regler 400 gesteuert.

Vorzugsweise wird, um die Auflösung der Mineralsalze zu erleichtern, mindestens eine Fraktion oder ein Teil des ersten Speisewasservolumens auf die Temperatur, vorzugsweise von ungefähr 15-25 °C gebracht, indem es durch die Heizvorrichtung, den Wärmetauscher 58 und den Heizkessel 38 geführt wird.

In einer bevorzugten Ausführungsform werden etwa 10-70% des ersten Speisewasservolumens direkt in Ausgleichsbehälter 200 eingeführt, indem das Füllventil 60 geöffnet und das Speisewasser durch die Einspeisleitung 59 geleitet wird. Der restliche Anteil von 30-90 % des ersten Speisewasservolumens wird hingegen in den Reaktionsfilter 500 eingespeist, in dem die erste Mischung von Mineralsalzen und eventuell von Ölen, Parfums bzw. Stärken aufgelöst wird. Vom Reaktionsfilter 500 wird dieser Anteil des ersten Wasservolumens in den Ausgleichsbehälter 200 eingespeist und mit dem restlichen Anteil des ersten Speisewasservolumens vermischt, um das salzhaltige Wasser mit der nominalen oder idealen Zusammensetzung zu erhalten. Von hier aus gelangt das salzhaltige Wasser über die Pumpe 31 und Zuführleitung 30 in das Schwimmbecken 100. In einer bevorzugten Ausführungsform wird im Rahmen der vorgelagerten Makrophase noch vor der Entnahme des ersten Speisewasservolumens eine Probe jenes Speisewassers analysiert. Die Probe des Speisewassers wird analysiert, um die Zusammensetzung des Wassers aus dem Wasserversorgungssystem, über das die Schwimmbadanlage 1 versorgt wird, zu erfassen und um zu verstehen, auf welche Weise dieses Wasser auf die Einführung bestimmter Typen von Mineralsalzen reagieren kann. Im Besonderen werden vorzugsweise die folgenden Speisewasserparameter gemessen: pH-Wert, elektrische Leitfähigkeit, Trübung, feste Rückstände, Sauerstoff-, Kalk-, Eisen-, Kalium-, Magnesium-, Mangan-, Lithium-, Sulfat-, Sulfur-, Karbonat-, Kohlenwasserstoffsäure-, Phosphat-, Nitrat-, Chlormenge insgesamt.

Vorzugsweise wird während der ersten Makrophase der Typ und die Menge an Mineralsalzen ausgewählt, um die erste Mischung zu definieren, zum Beispiel Magnesiumaluminiumsilikat, Magnesiumsulfat oder andere Salze, die dem Fachmann bekannt sind, um so die nominale Zusammensetzung des salzhaltigen Wassers zu definieren, das in die Anlage geladen wird. Zusätzlich zu Mineralsalzen können Öle, Parfums und / oder Stärken wie Carrageenan, Maisstärke, Peg-40-hydriertes Rizinusöl in das Wasser eingeführt werden, um Salzhaltiges Wasser zu erzeugen.

Vorzugsweise beträgt die Menge der Mischung aus Mineralsalzen bzw. Parfums bzw. Ölen bzw. Stärken, die im Speisewasser aufgelöst werden, um salzhaltiges Wasser zu erzeugen, ungefähr 0,2-0,6 Gramm pro Liter.

Darüber hinaus werden vorzugsweise innerhalb der ersten Makrophase die Referenzparameter festgelegt, bezüglich derer die Abweichung der Zusammensetzung des realen salzhaltigen Wassers gegenüber der Sollzusammensetzung gemessen wird. Insbesondere werden die Grenzwerte oder Schwellenwerte der Referenzparameter definiert, die nach Erreichen oder Überschreiten der tatsächlichen Zusammensetzung des salzhaltigen Wassers in der Anlage 1 den Beginn der Korrektur bestimmen. Mit anderen Worten, durch die Schwellenwerte wird für jeden Referenzparameter das Intervall definiert, innerhalb dessen der reale Wert des Referenzparameters variieren kann, bevor eine Korrektur ausgelöst wird.

Das bedeutet, dass durch Berechnen für jeden der Referenzparameter der Zusammensetzung des Salzwassers die Abweichung des realen Werts in Bezug auf den entsprechenden nominalen oder idealen Wert und Vergleichen der Abweichung mit dem Intervall, das durch Schwellen- oder Grenzwerte definiert ist, bestimmt werden kann wann es notwendig ist, eine Korrektur für das salzhaltige Wasser vorzunehmen, das zwischen dem Ausgleichsbehälter und dem Becken 100 zirkuliert.

In einer bevorzugten Ausführungsform sind die Referenzparameter, bezüglich derer die Zusammensetzung des salzhaltigen Wassers überwacht wird:
elektrische Leitfähigkeit, bzw. Salzkonzentration bzw. Zusammensetzung der Salze bzw. Trübung. Beispielsweise wird der Grenz- oder Schwellenwert für die Leitfähigkeit auf einen ungefähren Wert zwischen 0,1 % und 3 % im Verhältnis zur nominalen Leitfähigkeit des salzhaltigen Wassers festgelegt. Mit anderen Worten liegt der Grenzwert oder die Grenze für die Leitfähigkeit zwischen etwa 0,1% und 3% in Bezug auf die Anwesenheit von Salzen der nominalen Zusammensetzung des salzhaltigen Wassers. Für die Trübung wird der Bezugswert der Überschreitung, beispielsweise von 15 %, der Trübung des Speisewassers dargestellt. Daher liegt in diesen bevorzugten Ausführungsformen der Bereich, der durch die Schwellenwerte für die elektrische Leitfähigkeit definiert ist, zwischen etwa + 0,1% und - 0,1% oder zwischen etwa + 3% und - 3% in Bezug auf den Nennwert. der elektrischen Leitfähigkeit von salzhaltigem Wasser; während das durch die Schwellenwerte definierte Intervall für die Trübung zwischen +15 % und -15 % im Verhältnis zum Trübungswert des Speisewassers beträgt.

Die Anlage wird dann in Betrieb genommen, indem das salzhaltige Wasser zwischen dem Becken 100 und dem Ausgleichsbehälter 200 in Zirkulation gebracht wird. Das ermöglicht, dass Badegäste in das Becken 100 eintauchen zu können.

Ab diesem Zeitpunkt beginnt die zweite Makrophase des Verfahrens.

Während des Anlagenbetriebs neigt das salzhaltige Wasser aufgrund der Anwesenheit der Badegäste und der Verdunstung dazu, eine Variation bezüglich der Zusammensetzung zu erfahren. Daher wird während des Betriebs die reale Zusammensetzung des salzhaltigen Wassers ermittelt. Im Besonderen wird die Zusammensetzung des salzhaltigen Wassers überwacht, um die eventuelle Abweichung eines oder mehrerer Referenzparameter der Zusammensetzung des salzhaltigen Wassers von der nominalen Zusammensetzung zu erfassen. Im Detail wird der reale Wert der Referenzparameter der Zusammensetzung des salzhaltigen Wassers, das zwischen Becken 100 und Ausgleichsbehälter 200 zirkuliert, für jeden der genannten Referenzparameter der Zusammensetzung des salzhaltigen Wassers, die Abweichung des realen Wertes im Verhältnis zum entsprechenden nominalen oder idealen Wert berechnet, wobei die genannte Abweichung mit dem Intervall verglichen wird, das von den Schwell- oder Grenzwerten definiert wird.

Vorzugsweise werden durch Leitfähigkeits- 34 und Trübungssonde 33 die realen Werte der Referenzparameter bezüglich der elektrischen Leitfähigkeit 34 und somit das Vorhandensein von Salzen und die Trübung erfasst. Diese realen Werte werden mit den Grenz- oder Schwellenwerten bezüglich der oben angeführten Referenzparameter wie vorab festgelegt verglichen. Vorzugsweise werden die realen Werte der Referenzparameter an den Regler 400 gesendet, der die Berechnung der Abweichung und die Prüfung des Werts der genannten Abweichung vom von den Grenz- oder Schwellenwerten definierten Intervall vornimmt.

Vorzugsweise wird außerdem die Temperatur des aus dem Becken 100 überlaufenden salzhaltigen Wassers, das innerhalb der anderen Komponenten von Schwimmbadanlage 1 zirkuliert, erfasst.

Falls die Abweichung des realen Wertes vom entsprechenden nominalen oder idealen Wert aller Referenzparameter ins Intervall fällt, das von den Schwellenwerten definiert wird, wird die oben angeführte Überwachungsphase der Zusammensetzung des salzhaltigen Wassers durch die Erfassung der realen Referenzparameterwerte wiederholt. In anderen Worten wird die Überwachung der realen Werte der Referenzparameter so lange wiederholt, bis keine Abweichung der realen Zusammensetzung des salzhaltigen Wassers erfasst wird, die den vorab festgelegten Grenz- oder Schwellenwert hinsichtlich mindestens eines der genannten Referenzparameter erreicht oder überschreitet.

Falls die Abweichung des realen Wertes vom entsprechenden nominalen oder idealen Wert hinsichtlich mindestens eines der Referenzparameter das Intervall überschreitet, das von den Schwellenwerten definiert wird, wird eine Korrekturwasserreserve vorbereitet. In einer bevorzugten Ausführungsform beginnt die Zubereitung einer Korrekturwasserreserve, sobald die realen Werte hinsichtlich der Trübung bzw. elektrischen Leitfähigkeit des salzhaltigen Wassers die Grenz- oder Schwellenwerte überschreiten, die durch diese Referenzparameter definiert werden.

Aus dem Wasserversorgungssystem wird ein zweites Speisewasservolumen entnommen; dieses zweite Speisewasservolumen wird in dem Reaktionsfilter 500 eingespeist. Im Besonderen sieht dieser Vorgang vor, dass durch die Verbindung51 mit dem Wasserversorgungssystem ein zweites Speisewasservolumen entnommen wird, wobei dieses zweite Speisewasservolumen über die Lastleitung 52 in dem Reaktionsfilter 500 eingespeist wird. Vorzugsweise wird Öffnung des genannten Lastventils 55 von Regler 400 gesteuert. Das zweite Speisewasservolumen wird vorzugsweise durch den zweiten Wärmetauscher 57 und Heizkessel 38 geleitet, um es auf eine Temperatur von 15-25 °C oder auf die Temperatur des in der Anlage zirkulierenden salzhaltigen Wassers zu bringen.

Dann wird in dem zweiten Speisewasservolumen eine zweite Mischung von Mineralsalzen aufgelöst, um eine Korrekturwasserreserve in dem Reaktionsfilter 500 mit mindestens einer entsprechenden Zusammensetzung von Korrekturwasser zu schaffen. Innerhalb des zweiten Speisewasservolumens wird eine zweite Mischung von Mineralsalzen aufgelöst, denen Parfüm und/oder Stärke und/oder Öle zugesetzt werden können, um das genannte Korrekturwasser zu erzeugen. Auf diese Weise wird in dem Reaktionsfilter 500 eine Reserve an Korrekturwasser mit mindestens einer entsprechenden Zusammensetzung an Korrekturwasser. Diese korrigierende Wasserzusammensetzung ist vorzugsweise durch einen höheren Salzgehalt gekennzeichnet als Salzwasser mit idealer oder nomineller Zusammensetzung. Vorzugsweise sind die erste und die zweite Mischung von Mineralsalzen, mit dem möglichen Zusatz von Parfüm und/oder Stärke und/oder Öl, die zur Herstellung des salzhaltigen Wassers bzw. des Korrekturwassers verwendet werden, gleich. Außerdem ist es noch bevorzugter, wenn die Konzentration der Salze im Korrekturwasser am Ende dieses Arbeitsgangs noch höher als die Konzentration der Salze im salzhaltigen Wasser der nominalen Zusammensetzung ist, d. h. mit der am Ende der Zubereitung erhaltenen Zusammensetzung.

Dann wird ein Teil der vorab erzeugten Korrekturwasserreserve mit dem in dem Ausgleichsbehälter 200 enthaltenen salzhaltigen Wasser vermischt. Dies bedeutet, dass mindestens ein Anteil des Volumens des genannten Korrekturwassers aus dem Reaktionsfilter 500 entnommen und in den Ausgleichsbehälter 200 eingespeist wird. Vorzugsweise findet dieser Arbeitsgang statt, wenn die Lösung der zweiten Mischung von Mineralsalzen und das zweite Speisewasservolumen homogen sind.

Die Überleitung vom Reaktionsfilter 500 zum Ausgleichsbehälter 200 erfolgt über Verbindungsrohre 53. Im Ausgleichsbehälter 200 vermischt sich der Anteil des Korrekturwasservolumens mit dem dort enthaltenen salzhaltigen Wasser. Das mit dem salzhaltigen Wasser aus dem Ausgleichsbehälter 200 vermischte Korrekturwasser wird durch die Zufuhrleitung 30 zum Becken 100 geleitet.

Danach zirkuliert das korrigierte salzhaltige Wasser zwischen dem Ausgleichsbehälter 200 und dem Becken 100.

Die tatsächliche Zusammensetzung des Salzwassers, das zwischen dem Becken 100 und dem Ausgleichsbehälter 200 zirkuliert, wird wiederum überwacht, um die realen Werte der Referenzparameter zu erfassen und diese mit den jeweiligen Schwellenwerten oder Grenzwerten der Referenzparameter zu vergleichen. Insbesondere wird für jeden der Referenzparameter der Zusammensetzung des salzhaltigen Wassers die Abweichung des realen Werts in Bezug auf den nominalen oder idealen Wert berechnet und diese Abweichung mit dem Intervall verglichen, das durch Grenz- oder Schwellenwerte definiert ist. Vorzugsweise werden die realen Werte der Referenzparameter an den Regler 400 gesendet, der die Berechnung der Abweichung und die Prüfung des Werts der genannten Abweichung vom von den Grenz- oder Schwellenwerten definierten Intervall vornimmt.

Liegt die Abweichung des reellen Wertes gegenüber dem entsprechenden nominalen oder idealen Wert aller Referenzparameter innerhalb des durch die Schwellenwerte definierten Bereichs, wird weiterhin die tatsächliche Zusammensetzung des zwischen dem Ausgleichsbehälter und dem Becken zirkulierenden salzhaltigen Wassers überwacht.

Falls aber die Abweichung des realen Wertes vom entsprechenden nominalen oder idealen Wert aller Referenzparameter das von den Schwellenwerten definierte Intervall überschreitet, wird dem Wasserversorgungssystem ein drittes Wasservolumen entnommen, in den Reaktionsfilter 500 eingespeist und die genannte Korrekturwasserreserve aufgelöst. Vorzugsweise wird der Reaktionsfilter 500 mit dem dritten Volumen des Speisewassers nachgefüllt, um die Korrekturwasserreserve aufzulösen. Um das dritte Speisewasservolumen einzuspeisen, wird das Lastventil 55 geöffnet, um die Verbindung zwischen dem Wasserversorgungssystem und dem Reaktionsfilter 500 zu öffnen. Vorzugsweise wird die Öffnung des Lastventils 55 vom Regler 400 gesteuert. Das dritte Speisewasservolumen wird vorzugsweise durch den zweiten Wärmetauscher 57 und Heizkessel 38 geleitet, um es auf eine Temperatur von 15-25 °C oder auf die Temperatur des in der Anlage zirkulierenden salzhaltigen Wassers zu bringen. Das aufgelöste Korrekturwasser, das bei diesem Vorgang durch die Zugabe des vierten Speisewasservolumens erhalten wird, hat eine geringere Konzentration an Salzen als das anfänglich erhaltene korrigierende Wasser durch Zugabe der zweiten Mischung von Mineralsalzen zu dem zweiten Speisewasservolumen.

Dann wird mindestens ein Anteil der Korrekturwasserreserve, in diesem Fall verdünnt, mit dem Salzwasser, das in dem Ausgleichsbehälter 200 enthalten ist, erneut gemischt. Insbesondere wird diese weitere Volumenfraktion aus dem Reaktionsfilter 500 entnommen und in den Ausgleichsbehälter 200 eingespeist.

Dann wird das salzhaltige Wasser zwischen dem Ausgleichsbehälter 200 und dem Becken 100 wieder in Umlauf gebracht.

An diesem Punkt wird die Betriebs- oder Überwachungsphase der tatsächlichen Werte der Referenzparameter der Salzzusammensetzung, die Berechnung der Abweichung der realen Werte der Referenzparameter in Bezug auf die nominalen oder idealen Werte und die Verifizierung der Einheit der Abweichung von den Intervallen, die durch die Schwellenwerte definiert sind, die den Vorgängen oder Schritten zum Nachfüllen der korrigierenden Wasserzufuhr und zum Mischen mindestens einer weiteren Fraktion des korrigierenden Wassers, das mit Salzwasser verdünnt ist, wiederholt.

Es sei darauf hingewiesen, dass, da das Korrekturwasser mit neuem Speisewasser verdünnt wird, das nach der erneuten Einführung des Speisewassers in den Reaktionsfilter 500 das erhaltene Korrekturwasser eine niedrigere Salzkonzentration aufweist als das Wasser des vorherigen Zyklus. Somit könnte es in jedem Zyklus erforderlich sein, eine höhere Korrekturwassermenge zu verwenden, um die Zusammensetzung des salzhaltigen Wassers zu korrigieren. In anderen Worten kann es notwendig sein, ein Korrekturwasservolumen zu einem Korrekturzyklus hinzuzufügen.

Um schließlich eine effiziente Korrektur des in Anlage 1 zirkulierenden salzhaltigen Wassers zu erhalten, ist es auch vorzuziehen, die Zusammensetzung des salzhaltigen Wassers, einmal korrigiert durch Einleiten einer Fraktion des im Reaktionsfilter 500 enthaltenen Wasservolumens, beim Austritt aus dem Ausgleichsbehälter 200 zu überprüfen. Diese Überwachung erfolgt mit Hilfe von Regler 400 auf der Grundlage der Daten, die mit Hilfe der Mittel zur Erfassung der Zusammensetzung ermittelt wurden, welche die Referenzparameter der Zusammensetzung des salzhaltigen Wassers ermitteln. Vorzugsweise sind die Mittlen die Trübungssonde 33 und Leitfähigkeitssonde 34.

Selbst wenn Korrigierwasser zu dem in dem Ausgleichsbehälter 200 enthaltenen salzhaltigen Wasser hinzugefügt wird, stimmen tatsächlich die tatsächlichen Werte der Referenzparameter der Zusammensetzung des salzhaltigen Wassers, korrigiert am Ausgang des Ausgleichsbehälter 200, nicht wieder mit den Nominalwerten der Zusammensetzung überein. Wenn das vorkommt, bedeutet das, dass das Korrekturwasser nicht mehr wirksam ist, das heißt, wenn das Korrekturwasserreserve ausreichend verdünnt wurde, um eine geringe Konzentration an Mineralsalzen zu ergeben.

Für den korrekten Betrieb der Anlage ist es daher vorzuziehen, den Reaktionsfilter 500 mit der zweiten Mischung aus Mineralsalzen und möglicherweise Ölen, Stärken und / oder Parfüms wieder aufzufüllen.

Aus diesem Grund ist es nach der Verdünnung des Korrekturwassers und der Vermischung eines Teils davon mit dem im Ausgleichsbehälter 200 enthaltenen salzhaltigen Wasser vorzuziehen, den tatsächlichen Wert der Referenzparameter der Zusammensetzung des im Ausgleichsbehälter 200 enthaltenen salzhaltigen Wassers mit diesem verdünnten Korrekturwasseranteil zu ermitteln, für jeden dieser Referenzparameter der Zusammensetzung des salzhaltigen Wassers die Abweichung des Istwertes vom nominalen oder idealen Wert zu berechnen und die soeben berechnete Abweichung mit der vor der Einleitung von Korrekturwasser, verdünnt, in den Ausgleichsbehälter 200 zu vergleichen.

Ist die Abweichung zwischen dem nach der Korrektur mit verdünntem Korrekturwasser gemessenen nominalen Wert und dem Idealwert mindestens eines Referenzparameters größer oder gleich der Abweichung, so ist der als Korrektur berechnete erste Parameter mit Speisewasser zum Reaktionsfilter 500 aufzufüllen und das zweite Mineralgemisch im Reaktionsfilter 500 aufzulösen. Um insbesondere den Reaktionsfilter 500 zu füllen, wird das das Lastventil 55. Vorzugsweise wird die Öffnung des Lastventils 33 durch die Regler 400 geregelt.

So ist es möglich, den Korrekturzyklus so fortzusetzen, als ob die Reserve des Korrekturwassers gerade erstellt worden wäre.

Schließlich sieht das Verfahren vorzugsweise vor, dass irgendwelche Salzgehaltsspitzen gehandhabt werden, die beispielsweise im Fall eines Systemfehlers auftreten können.

Wenn ein tatsächlicher Wert der elektrischen Leitfähigkeit oder Konzentration von Salzen nachgewiesen wird, der beträchtlich höher ist als der Schwellenwert, der für die elektrische Leitfähigkeit oder die Konzentration von Salzen definiert ist, wird die Einleitung von Korrekturwasser in den Ausgleichsbehälter 200 unterbrochen.

Anstelle des Korrekturwassers wird in den Ausgleichsbehälter 200 ein Speisewasservolumen eingeführt. Dies erfolgt vorzugsweise durch den Regler 400, der das Öffnen von Füllventil 60 steuert.

Schließlich wird das salzhaltige Wasser während des Betriebs der Anlage vorzugsweise bei einer Temperatur von ungefähr 30-35 °C erhalten. In anderen Worten wird das zwischen Ausgleichsbehälter (200) und Becken (100) zirkulierende salzhaltige Wasser auf eine Temperatur von ungefähr 30-35 °C erwärmt.

## Patentansprüche

1. Verfahren zur Wasserbehandlung in einer Schwimmbadanlage (1), wobei die Schwimmbadanlage mindestens ein Schwimmbecken (100) und einen Ausgleichsbehälter (200) umfasst, wobei der genannte Ausgleichsbehälter (200) mit dem Schwimmbecken (100) verbunden ist, wobei das Verfahren Folgendes umfasst:
a) Entnahme aus einem Wasserversorgungssystem eines ersten Speisewasservolumens und Überführen von mindestens einem Bruchteil des ersten Speisewasservolumens in den Reaktionsfilter (500), wobei sich der Skimmer vom genannten Schwimmbecken (100) und vom Ausgleichsbehälter (200) unterscheidet, wobei er mit dem Ausgleichsbehälter (200) verbunden ist und den restlichen Teil des ersten Speisewasservolumens in den Ausgleichsbehälter (200) fließen lässt;
b) Auflösen einer ersten Mischung von Mineralsalzen in mindesten diesem Bruchteil des ersten Speisewasservolumens, das in Reaktionsfilter (500) enthalten ist, Überleiten des genannten Teils in den Ausgleichsbehälter (200) für das Vermischen mit dem restlichen Teil des ersten Speisewasservolumens, um Salzhaltige Wasser mit einer entsprechenden chemischen nominale oder ideale Zusammensetzung zu erzeugen der Salzhaltige Wasser;
c) Einspeisen des salzhaltigen Wassers, mit der chemische nominaler oder idealer Zusammensetzung von dem Ausgleichsbehälter (200) in das Schwimmbecken (100), wobei das salzhaltige Wasser zwischen Schwimm-(100) und Ausgleichsbehälter (200) zirkuliert;
d) Erfassen des realen Werts der Referenzparameter der Zusammensetzung des salzhaltigen Wassers, das zwischen dem Becken (100) und dem Ausgleichsbehälter (200) zirkuliert, Berechnen der Abweichung des realen Wertes für jeden der Parameter der Zusammensetzung des salzhaltigen Wassers, bezüglich des entsprechenden nominalen oder idealen Wertes und vergleichen diese Abweichung mit dem Intervall, das durch Schwellenwerte oder Grenzwerte definiert ist,
e) Falls die Abweichung des realen Wertes vom entsprechenden nominalen oder idealen Wert aller Referenzparameter nicht in das von den Schwellenwerten definierte Intervall fällt, wird die Phase d wiederholt;
f) Falls aber die Abweichung des realen Wertes vom entsprechenden nominalen oder idealen Wert mindestens einer der Referenzparameter das von den Schwellenwerten definierte Intervall überschreitet, wird aus dem Wasserversorgungssystem ein zweites Speisewasservolumen entnommen und das Speisewasservolumen wird in dem Reaktionsfilter (500) eingespeist;
g) Im zweiten Speisewasservolumen wird eine zweite Mineralsalzmischung aufgelöst, um eine Korrekturwasserreserve in dem Reaktionsfilter (500) einzurichten, die mindestens eine entsprechende Zusammensetzung des Korrekturwassers aufweist;
h) Mischen mindestens einen Teils der Korrekturwasserreserve, das dem Reaktionsfilter (500) entnommen wurde, mit dem salzhaltigen Wasser, das in dem Ausgleichsbehälter (200) enthalten ist;
i) Das korrigierte salzhaltige Wasser zwischen Ausgleichsbehälter (200) und Schwimmbecken (100) in Umlauf bringen;
j) Erfassen des realen Werts der Referenzparameter der Zusammensetzung des salzhaltigen Wassers, das zwischen Schwimm- (100) und Ausgleichsbehälter (200) zirkuliert, Berechnen der Abweichung des reellen Werts in Bezug auf den nominalen oder idealen Wert für jeden der Referenzparameter der Zusammensetzung des salzhaltigen Wassers und Vergleichen der Abweichung mit dem Intervall, das durch Grenz- oder Schwellenwerte definiert ist;
k) Falls die Abweichung des realen Wertes vom entsprechenden nominalen oder idealen Wert aller Referenzparameter nicht in das von den Schwellenwerten definierte Intervall fällt, wird die Phase j wiederholt;
l) Falls aber die Abweichung des realen Wertes vom entsprechenden nominalen oder idealen Wert aller Referenzparameter das von den Schwellenwerten definierte Intervall überschreitet, aus dem Wasserversorgungssystem ein drittes Speisewasservolumen entnehmen und das dritte Speisewasservolumen in das genannte Reaktionsfilter (500) einführen;
m) Vermischen von mindestens einen Teil der vom genannten Reaktionsfilter (500) entnommenen, verdünnten Korrekturwasserreserve mit dem salzhaltigen Wasser, das im Ausgleichsbehälter (200) enthalten ist;
n) Das erneut korrigierte salzhaltige Wasser zwischen dem Ausgleichsbehälter (200) und dem Becken (100) in Umlauf bringen;
den Zyklus der Phase j wiederholen.

2. Verfahren nach Anspruch 1, in der die Phasen zeitlich aufeinander folgen.

3. Verfahren nach Anspruch 1 oder 2, wobei eine Phase o) stromabwärts von Phase m umfasst wird, wobei in der Phase o der tatsächlicheWert der Referenzparameter für die Zusammensetzung des in dem Ausgleichsbehälter enthaltenen Salzwassers, gemischt mit dem verdünnten Anteil des Korrekturwassers, ermittelt wird, wobei für jeden dieser Referenzparameter für die Zusammensetzung des salzhaltigen Wassers die Abweichung des tatsächlichen Wertes vom nominalen oder idealten Wert berechnet wird und wobei die in dieser Phase berechnete Abweichung mit der in Phase o berechneten Abweichung mit der in Phase j berechneten Abweichung verglichen wird.

4. Verfahren nach Anspruch 3, wobei, wenn die Abweichung zwischen dem in Phase o gemessenen nominalen Wert und dem idealen Wert mindestens eines Referenzparameters größer oder gleich der in Phase j berechneten Abweichung ist, der Reaktionsfilter n (500) mit Speisewasser aufgefüllt wird, das zweite Mineralgemisch im Reaktionsfilter (500) gelöst und der Zyklus aus Phase h erneut aufgenommen wird.

5. Verfahren nach einem der vorhergehnden Ansprüche, wobei das in Phase g erhaltene Korrekturwasser eine höhere Salzkonzentration aufweist als das in Phase I erhaltene Korrekturwasser.

6. Verfahren nach einem der vorhergehenden Ansprüche, in der das in Phase g erhaltene Korrekturwasser eine höhere Salzkonzentration aufweist als das in Phase c erhaltene salzhaltige Wasser.

7. Verfahren nach einem der vorhergehenden Ansprüche, das eine Analysephase der Zusammensetzung des Speisewassers umfasst.

8. Verfahren nach Anspruch 7, wobei die genannte Analysephase der Zusammensetzung des Wassers für den hygienisch-sanitären Gebrauch oder des Speisewassers, die Erfassung der folgenden Messungen umfasst: pH-Wert, elektrische Leitfähigkeit, feste Rückstände, Sauerstoff-, Kalk-, Eisen-, Kalium-, Magnesium-, Mangan-, Lithium-, Sulfat-, Sulfur-, Karbonat-, Kohlenwasserstoffsäure-, Phosphat-, Nitrat-, Chlormenge, Trübung insgesamt.

9. Verfahren nach einem beliebigen der vorhergehenden Ansprüche, in dem der genannte Referenzparameter des salzhaltigen Wassers die Trübung des salzhaltigen Wassers, die elektrische Leitfähigkeit des salzhaltigen Wassers bzw. die Trübung bzw. die Salzzusammensetzung bzw. die Konzentration des salzhaltigen Wassers umfasst.

10. Verfahren nach einem der vorhergehenden Ansprüche, wobei der Schwellen- oder Grenzwert für die elektrische Leitfähigkeit im Verhältnis zur elektrischen Leitfähigkeit des salzhaltigen Wassers ungefähr 0,1 %-3 % beträgt.

11. Verfahren nach einem der vorhergehenden Ansprüche, wobei der Schwellen- oder Grenzwert für die Trübung im Verhältnis zur Trübung des Speisewassers ungefähr 15 % beträgt.

12. Verfahren nach einem der vorhergehenden Ansprüche, wobei die erste und zweite Mischung der Mineralsalze gleich ist.

13. Verfahren nach einem der vorhergehenden Ansprüche, wobei die erste und zweite Mischung der Mineralsalze Magnesiumaluminiumsilikate und/oder Magnesiumsulfate enthalten.

14. Verfahren nach einem der vorhergehenden Ansprüche, wobei zur Erzeugung von salzhaltigem Wasser und Korrekturwasser neben Salzen auch Öle, Duftstoffe und / oder Stärken im Speisewasser gelöst werden.

15. Verfahren nach Anspruch 13 oder 14, wobei die gesamte Menge der Salze bzw. Parfums, Stärken und Mineralien, die im Speisewasser aufzulösen sind, um das salzhaltige Wasser zu erzeugen, ungefähr 0,2-0,6 g/l beträgt.

16. Verfahren nach einem der vorhergehenden Ansprüche, wobei das zwischen Ausgleichsbehälter (200) und Becken zirkulierende salzhaltige Wasser während des Betriebs der Anlage auf eine Temperatur von ungefähr 30-35 °C erwärmt wird.

17. Verfahren nach einem der vorhergehenden Ansprüche, wobei vor der Einspeisung in den Reaktionsfilter (500), das Speisewasser auf eine Temperatur von ungefähr 15-25 °C oder auf die Temperatur des salzhaltige Wassers, das in Anlage (1) zirkuliert, erwärmt wird.

18. Schwimmbadanlage (1), verbunden mit dem Wasserversorgungssystem, umfassend ein Schwimmbecken (100), welches das Hauptbecken für die Umfassung des salzhaltigen Wassers darstellt, einen Ausgleichsbehälter (200), der dazu dient, das aus dem Schwimmbecken (100) ausgetretene salzhaltige Wasser aufzufangen, und aus einer Zuführleitung (30) und Pumpmitteln (31) zur Rückführung des in dem Ausgleichsbehälter (200) enthaltenen salzhaltigen Wassers in das Schwimmbecken (100), wobei dieses Schwimmbecken (1) des Weiteren **gekennzeichnet ist durch**:
- Mittel (33, 34) zu Erfassung der chemischen Zusammensetzung für die Messung der tatsächlichen Parameter der Zusammensetzung des salzhaltigen Wassers,
- einen Reaktionsfilter (500), hydraulisch mit dem Wasserversorgungssystem und dem Ausgleichsbehälter (200) verbunden, geeignet für für die Erzeugung und Umfassung des Korrekturwassers,
- Elektronischer Regler (400), elektrisch verbunden mit den Mitteln (33, 34) für die Erfassung der Zusammensetzung (33, 34), wobei dieser auf der Grundlage der tatsächlichen Werte der Parameter, die von den Mittleln (33, 34) für die chemische Zusammensetzung ermittelt werden, die hydraulische Verbindung zwischen dem Wasserversorgungssystem und dem Reaktionsfilter (500) öffnet und schließt.

19. Schwimmbadanlage (1) nach Anspruch 18, wobei die Mittel (33, 34) zur Erfassung der chemischen Zusammensetzung elektrolytische Leitfähigkeits- und Trübungssonden sind.

20. Schwimmbadanlage (1) nach Anspruch 18 oder 19, neben den Mitteln zur Erfassung der Temperatur (35) des salzhaltigen Wassers auch Mittel zur Erfassung der Temperatur des Speisewassers (61), Heizinstrumente (37, 38) des salzhaltigen Wassers und Heizinstrumente (38, 57) des genannten Speisewassers umfassend

21. Schwimmbadanlage (1) nach einem der vorhergehenden Ansprüche 18 bis 20 zur Ausführung des Verfahrens nach einem der Ansprüche von 1 bis 15.
